# EUROPEAN PATENT SPECIFICATION

(11) **EP 2 237 871 B1**
(45) Date of publication and mention of the grant of the patent: **30.03.2011**
(21) Application number: 09738035.6
(22) Date of filing: 21.04.2009
(51) Int. Cl.: B01J 8/26

(54) **METHOD OF CONVERTING A RAW MATERIAL STREAM INTO A PRODUCT STREAM USING A FLUIDIZED BED AND APPARATUS FOR USE IN SAID METHOD**
VERFAHREN ZUR UMWANDLUNG EINES ROHSTOFFSTROMS IN EINEN PRODUKTSTROM MITTELS EINES WIRBELBETTS UND VORRICHTUNG ZUR VERWENDUNG FÜR DIESES VERFAHREN
PROCÉDÉ DE CONVERSION D'UN COURANT DE MATIÈRE PREMIÈRE EN UN COURANT DE PRODUIT À L'AIDE D'UN LIT FLUIDISÉ ET APPAREIL DESTINÉ À ÊTRE UTILISÉ DANS LEDIT PROCÉDÉ

(30) Priority: 29.04.2008 EP 08155330
(43) Date of publication of application: 13.10.2010
(73) Proprietor: Clean Fuels B.V., 7500 AE Enschede (NL)
(72) Inventor: SIEMONS, Roland, NL-7513 EM Enschede (NL)
(74) Representative: Verdonk, Peter Lambert F. M.
(86) International application number: PCT/EP2009/054750
(87) International publication number: WO 2009/132991

(56) References cited:
- EP-A- 0 235 531
- EP-A- 0 765 849
- GB-A- 789 228
- GB-A- 832 143
- US-A- 2 667 448

## Description

### TECHNICAL FIELD OF THE INVENTION

The present invention relates to a method and apparatus for making a product using at least one intermittently operated fluidized bed.

### BACKGROUND OF THE INVENTION

Fluidized bed reactors are usually vessels that are filled with particles of one or more types of solid matter through which gas or liquid streams are flown to bring the particles into a state of fluidization. Fluidized bed reactors are usually designed for carrying out a chemical or physical process within the fluidized bed under substantially stationary physical and/or chemical conditions.

In order to maintain the desired stationary physical and chemical conditions in the fluidized bed reactor it is often necessary to regularly, if not constantly, remove or add solid material and/or energy from/to the fluidized bed reactor.

Examples of such processes were known from e.g. GB 789228A; GB 832143A; EP-A-0235531; EP-A-0765849 and US-A-2,667,448.

For the removal and/or addition of solids and/or energy to the fluidized bed reactor, specific facilities, such as conveyor means, cyclones, heat exchangers, and pressure adjusting means are needed and sometimes these facilities need to be integrated with the fluidized bed reactor. Such specific facilities are relatively expensive to install and/or to exploit and may require maintenance and/or repair because of their vulnerable character.

It is known in the art to introduce heat into the fluidized bed of a reactor in order to ensure that the thermal conditions within the bed remain constant over time. One particular option for providing energy to a stationary fluidized bed, is the use of an internal burner which releases combustion products directly into the fluidized bed. These combustion products, however, mix with the primary reacting product and/or reactant. Thus, there is a risk of contamination and/or reduced product yield. In addition, this particular set-up has the disadvantage that it may necessitate separation of reactants and/or reaction products from the combustion products.

It is further noted that particular peripheral facilities sometimes are not technically effective in maintaining stationary conditions within the fluidized bed reactor. For instance, heat transfer through the reactor wall may be rate limiting and interfere with a scaling up beyond limits that are determined by the ratio of the outer reactor surface and the reactor volume of the fluidized bed reactor.

The present invention provides a method and apparatus for making a product using at least one fluidized bed reactor which avoid and/or minimize the above mentioned drawbacks and/or disadvantages.

### SUMMARY OF THE INVENTION

The present invention provides a method of converting a raw material stream into a product stream by passing said raw material stream through a bed of fluidized solid particles and allowing heat exchange to occur between the bed of fluidized solid particles and the raw material stream, said method being characterized in that it alternately employs a production mode and a restoration mode to control the temperature of the bed of fluidized solid particles:
- said production mode comprising passing the raw material stream through the bed of fluidized solid particles and allowing the temperature of the fluidized solid particles to decrease or to increase as a result of the production energy associated with the conversion of the raw material stream into the product stream, and
- said restoration mode comprising restoring the temperature of the bed of fluidized solid particles by passing a restoration stream through the bed of fluidized solid particles to decrease the temperature of the fluidized solid particles in case the temperature of the fluidized solid particles has increased during the production mode or to increase the temperature of the fluidized solid particles in case the temperature of the fluidized solid particles has decreased during the production mode;
- and that the fluidized solid particles are kept in the same reactor.

The invention is based on the following insights:
1) by operating a fluidized bed reactor in a production mode without maintaining the physical and/or chemical conditions within the fluidized bed reactor stationary, production conditions will only gradually (as opposed to abruptly) change to a level at which the production will proceed no longer or at an unpractical or non-economical rate;
2) this gradual change of production conditions is often due to gradual energy exchange with the fluidized solid particles, which particles as a result gradually loose their capability of absorbing or releasing production energy;
3) the capability of fluidized solid particles to absorb or release production energy can be restored by passing a restoration stream through the fluidized bed that causes cooling or heating of the fluidized solid particles to an adequate level;
4) changes in production conditions can often be tolerated within a relatively broad temperature window;
5) significant advantages can be realised by operating a fluidized bed reactor in a production mode without maintaining constant physical and/or chemical conditions, provided the latter conditions are restored during a subsequent restoration mode before production yields and/or product quality reach unacceptable levels;
6) the aforementioned production mode and restoration mode can be operated alternately in a continuous fashion for an indeterminate period of time;
7) the restoration mode, which is defined relative to the production mode that yields the primary product stream, can be designed in such a way that it also yields a useful product, meaning that both the production mode and the restoration mode are de facto productive modes.

An important advantage of the present invention resides in the fact that external specific facilities for maintaining physical and/or chemical process conditions within the fluidized bed reactor, and for the provision or removal of process energy are no longer required. More particularly, the present method enables continual operation of the fluidized bed reactor without the need of special equipment for the recirculation of externally heated or cooled solid particles, and without the need of heat exchangers placed inside or enclosing the fluidized bed.

It will be appreciated that the process of the present invention, using an intermittent fluidized bed, does solve the particular problems connected to operating a fluidized bed in a continuous manner (prior art process).

These problems are:
- the need to regularly, if not constantly remove or add solid material and/or energy from/to the fluidized bed reactor,
- the need for an additional solids restoration or conditioning reactor to and from where the solids are to be transferred.
- the need for specific devices such as conveyor means, cyclones, heat exchangers and pressure adjusting means,
- the need for means to avoid mixing of reactants and regeneration gases.
- the suitability of appendages for high temperatures,
- wear resistance of appendages,
- energy consumption of appendages, and
- complex process controls.

### BRIEF DESCRIPTION OF THE DRAWINGS

Figure 1 is a schematic view of a fluidized bed reactor which can be operated intermittently in a production mode and in a restoration mode.
Figure 2 shows a schematic view of two coupled fluidized bed reactors that are individually intermittently operated in a coordinated manner with each other (i.e. in counter-phase), and wherein the two operational modes are both productive, and, hence, each production mode is the restoration mode of the other production mode.
Figure 3 shows a schematic view of a prior art process using stationary fluidized beds from which solid material and/or energy is regularly removed.
Figure 4 shows a schematic view of a process according to the present invention, using intermittently operated fluidized beds and comprising a pyrolytic liquefaction of biomass (production mode) and a combustion reaction (restoration mode).

### DETAILED DESCRIPTION OF THE INVENTION

Accordingly, one aspect of the invention relates to a method of converting a raw material stream into a product stream by passing said raw material stream through a bed of fluidized solid particles and allowing heat exchange to occur between the fluidized solid particles and the raw material stream, said method being characterized in that it alternately employs a production mode and a restoration mode to control the temperature of the bed of fluidized solid particles:
- said production mode comprising passing the raw material stream through the bed of fluidized solid particles and allowing the temperature of the fluidized solid particles to decrease or to increase as a result of the production energy associated with the conversion of the raw material stream into the product stream, and
- said restoration mode comprising restoring the temperature of the bed of fluidized solid particles by passing a restoration stream through the bed of fluidized solid particles to decrease the temperature of the bed of fluidized solid particles in case the temperature of the fluidized solid particles has increased during the production mode or to increase the temperature of the fluidized solid particles in case the temperature of the fluidized solid particles has decreased during the production mode and that
- the fluidized solid particles are kept in the same reactor.

The term "stream" as used herein refers to a flow of material that may include gaseous, liquid and/or solid components.

The term "raw material stream" as used herein refers to the total flow of material that is entering the fluidized bed of the present method whilst it is operated in the production mode and that leaves the fluidized bed as the product stream. It should be understood that the material stream may be composed of several streams that become mixed before they enter the fluidized bed or that become admixed whilst they pass through the fluidized bed.

The term "restoration stream" as used herein refers to the total flow of material that is entering the fluidized bed of the present method whilst it is operated in the restoration mode. Also the restoration stream may be composed of several streams that become mixed before they enter the fluidized bed or that become admixed whilst they pass through the fluidized bed. The restoration stream employed in the present invention releases energy or absorbs energy whilst passing through the fluidized bed. This can be achieved, for instance, by employing a restoration stream having a temperature that is different from the temperature of the fluidized solid particles in the bed and allowing heat exchange to occur. The invention also encompasses the use of a restoration stream comprising components that will undergo an endothermic or exothermic chemical reaction in the fluidized bed or a physical phase change, thereby absorbing energy from or releasing energy to the fluidized solid particles.

The terminology "converting a raw material stream into a product stream" as used herein refers to both chemical and physical conversion. Thus, the present invention encompasses a method in which one or more reactants contained in the raw material stream are converted to into different chemical entities. The method also encompasses a process wherein no chemical reactions occur, but wherein, for instance, the physical state of one or more components in the raw material is changed (e.g. from liquid to vapour) or wherein the energy of the raw material stream is altered during its passage through the fluidized bed (e.g. conversion of saturated steam into superheated steam).

The term "production energy" refers to all energy associated with the conversion of the raw material stream into the product stream, and comprises conversion energy such as reaction energy and phase transition energy (e.g. evaporation), and also the energy associated with cooling or heating the raw material stream inside the fluidized bed. During the production mode of the present method the "production energy" is thermally released or absorbed by the fluidized solid particles.

As used herein, a "positive flow" of production energy involves production energy that is released by the fluidized solid particles in the bed in the production mode and a "negative flow" of production energy is production energy that is absorbed by the bed of fluidized solid particles in the production mode. Endothermic chemical reactions are a cause of positive flows of production energy, and exothermic chemical reactions are a cause of negative flows of production energy.

In the present method the chemical composition of the raw material stream and the restoration stream are different. Nonetheless, despite these compositional differences both streams may contain the same components, e.g. water, steam, nitrogen etc.

The present method can be operated in an effective manner by continuously monitoring a parameter that is indicative of the temperature of the fluidized solid particles and by switching from the production mode to the restoration mode and *vice versa* in dependency of said parameter. According to a particularly preferred embodiment, the production mode is continued until the temperature of the fluidized solid particles has changed to a value where the production mode cannot be carried out favourably, i.e. it has either increased to a preset maximum value or decreased to a preset minimum value and wherein during the subsequent restoration mode the temperature of the fluidized solid particles is restored to a preset target value. It is noted that this embodiment of the invention can be realised by monitoring one or more parameters that are indicative of the temperature of the fluidized solid particles. An example of a parameter that can suitably be used for this purpose is the temperature of the product stream.

In the aforementioned embodiment, the target value of the temperature typically lies within the range of 50-1200 °C. More preferably, said target value is in the range of 110-1000 °C, most preferably in the range of 300-900 °C. The difference between the preset minimum value and the target value or between the preset maximum value and the target value usually lies within the range of 5-400 °C. Preferably said difference is in the range of 10-200 °C and most preferably in the range of 20-150 °C.

The duration of both the production mode and the restoration mode can vary within wide ranges. Advantageously, the duration of the production mode is 1-200 minutes and the duration of the restoration mode is 0.5-60 minutes. More preferably, the duration of the production mode is 3-60 minutes and the duration of the restoration mode is 1-60 minutes.

In a preferred embodiment of the present method at least a part of the raw material stream is replaced by the restoration stream when the method switches from the production mode to the restoration mode. Typically at least 5 wt.%, more preferably at least 10 wt.% and most preferably at least 20 wt.% of the raw material stream is replaced by the restoration stream when the method switches from production mode to restoration mode.

As explained herein before, the present method can be operated for an indefinite period of time as the method is extremely robust due to the fact that it does not employ complex (sensitive) equipment and because the restoration mode effectively prevents the process from 'drifting'. Thus, in accordance with another preferred embodiment, the method comprises an uninterrupted sequence of at least 3 production modes and at least 3 restoration modes. Even more preferably, the present method comprises an uninterrupted sequence of 10 cycles, wherein each cycle comprises a single production mode and a single restoration mode.

Due to its robustness, the present method can suitably be operated in a continuous fashion for at least 24 hours, preferably for at least 72 hours.

The present method offers the advantage that it does not require recirculation of externally heated or cooled solid particles comprised in the fluidized bed, nor heat transfer through walls (including pipe walls of heat exchangers) bordering the fluidized bed, to ensure that the temperature of the solid bed particles is maintained at a stationary level. Thus, in accordance with an advantageous embodiment, the method does not rely on energy transfer by means of recirculation of externally heated or cooled solid particles nor by means of heat exchangers placed inside or enclosing the fluidized bed. More particularly, it is preferred that at least 20%, more preferably at least 30% of the production energy is provided or absorbed by the restoration stream. It should be understood that the energy provided or absorbed by the restoration stream includes energy that is released or absorbed by the restoration stream in the fluidized bed as a result of chemical reactions between reactants contained in the restoration stream and/or between matter contained in the fluidized bed and reactants contained in the restoration stream.

The benefits of the present invention are particularly manifest in case the fluidized solid particles remain fluidized in the bed throughout the production mode. According to a particularly preferred embodiment, the fluidized solid particles also remain fluidized in the bed throughout the restoration cycle, meaning that the fluidized solid particles remain fluidized in the bed throughout the cycle comprising a single production mode and a single restoration mode.

The present method may be operated with fluidized solid particles of varying diameter. Typically, the fluidized solid particles have a volume weighted average diameter in the range of 10-5000 µm, preferably in the range of 50-3000 µm and most preferably in the range of 100-2000 µm.

The solid particles employed in the fluidized bed may be inert or they may actually participate in the conversion of the raw material stream into the product stream and/or restoration stream, e.g. by catalysing a chemical reaction. Examples of fluidized solid particles that can suitably be employed in the present method include particles largely consisting of silicate (e.g. sand), heterogeneous catalyst, metal, metal oxide and combinations thereof.

It is preferred that in the present method the restoration stream causes the temperature of the fluidized solid particles to decrease due to energy absorption by the restoration stream and/or due to the occurrence of endothermic chemical reactions or, alternatively, that the restoration stream causes the temperature of the fluidized solid particles to increase due to energy release from the restoration stream and/or due to the occurrence of exothermic chemical reactions.

In a preferred embodiment, the present method concerns a production mode in which the conversion of the raw material stream into the product stream causes a temperature decrease of the fluidized solid particles (i.e. its processing by the fluidized bed requires a positive flow of production energy). Typically, in accordance with this embodiment of the invention, the temperature of the fluidized solid particles decreases by at least 10 °C, preferably by at least 20 °C and most preferably by at least 30 °C during the production mode.

In case the production mode involves a positive flow of production energy, it is advantageous to subsequently employ a restoration stream that comprises an energy carrier selected from the group consisting of hot gasses, hot vapours, hot liquids, or reactants that react exothermically under the conditions prevailing in the fluidized bed during the restoration mode and combinations thereof.

In case the restoration mode increases the temperature of the fluidized bed, it can be advantageous if during the restoration mode the fluidized solid particles catalyse an exothermic chemical reaction of reactants contained in the restoration stream.

Another preferred embodiment for increasing the temperature of the fluidized bed is a method wherein, during the restoration mode, an exothermic chemical reaction occurs between reactants contained in the restoration stream and matter that was accumulated in the bed of fluidized solid particles during the production mode. An example of such a matter is carbon. A suitable reactant that can react exothermically with the carbon matter is oxygen.

In a further preferred embodiment of the invention the restoration mode is performed by introducing a combustion medium, such as fuel and/or oxygen or air into the fluidized bed such that a combustion reaction occurs in the fluidized bed.

According to yet another embodiment, the restoration mode is realised by passing a hot gas stream through the fluidized bed. This option is very much preferred under circumstances where a source of hot gas is available.

In the above described embodiments of the present method that are characterized by a positive flow of production energy and, therefore, a temperature increase of the fluidized bed during the restoration mode, preferably at least 30%, more preferably at least 50% and most preferably at least 70% of the production energy is provided by the restoration stream. Even more preferably, the latter energy percentages are generated by exothermic chemical reactions occurring within the fluidized bed concurrent with the passage of the restoration stream.

Examples of processes of a positive flow of production energy that can occur in the fluidized bed during the production mode of the present method include heating of raw material streams, pyrolysis, dehydrogenation, evaporation, steam reforming, devolatilization and combinations thereof. These processes may be carried out using a raw material stream that comprises a raw material selected from the group consisting of biomass, coal, water, steam, C₁-C₁₀ alkanes, waste polymers and more preferably from recycled waste polymers such as from automotive tyres and from bottles, carpets, packaging material, furniture and office equipment, and combinations thereof such as contained in mixed construction and demolition waste, as well as pyrolytic oil such as derived from the above materials.

According to a particularly preferred embodiment, at least 50 wt.% , more preferably at least 70 wt.% and most preferably at least 80 wt.% of the raw material stream consists of the aforementioned raw material.

The term "biomass" as used herein refers to materials, originating from plants and animals, which are suitable for use as starting material for industrial products, including fractions and derivatives of these biological materials. Most commonly, biomass refers to plant matter grown for use as biofuel, but it also includes plant or animal matter used for production of fibres, chemicals or heat. Biomass may also include biodegradable wastes that can be burnt as fuel. The term biomass excludes organic material which has been transformed by geological processes into substances such as coal or petroleum. Examples of said biomass are wood chips, sugar cane bagasse, sugar beet bagasse, straw, hemp grass and the like.

A suitable example of a process of a positive flow of production energy that can be executed during the production mode of the present method is a devolatilization reaction of biomass or coal carried out at an elevated temperature above 600 °C. In such a reaction, the biomass or coal reactant is decomposed and devolatilized in the absence of in particular oxidizing materials such as oxygen or air. Where there is no means employed of delivering the associated production energy into the fluidized bed, the temperature prevailing in the fluidized bed decreases down to a level where process conditions inside the fluidized bed and thermal conditions of the solid particles are no longer favourable for the desired devolatilization reaction.

In accordance with another embodiment the production mode comprises the production of superheated steam of 120-150 °C (or any other desired temperature range) and a suitable pressure out of steam of a lower temperature and the same suitable pressure. If the bed material consist of sand particles, and if the production mode is started at a moment in time where the bed temperature equals the upper side of the desired temperature range (e.g. 150 °C), then, with lapse of time the sand particles will cool down until a moment in time when they will no longer be capable of providing sufficient energy to the steam. Subsequently, the process conditions inside the fluidized bed and the temperature of the solid particles can be restored during the restoration mode, for instance, by carrying out a combustion reaction inside the fluidized bed.

In another preferred embodiment, the present method concerns a production mode in which the conversion of the raw material stream into the product stream causes a temperature increase of the fluidized solid particles (i.e. its processing by the fluidized bed requires a negative flow of production energy).

Typically, in accordance with this embodiment of the invention the temperature of the fluidized solid particles increases by at least 10 °C, preferably by at least 20 °C and most preferably by at least 30 °C during the production mode.

In an advantageous embodiment of the invention, an exothermic chemical reaction of reactants contained in the raw material stream that is catalyzed by the fluidized solid particles causes the negative flow of production energy during the production mode.

In another preferred embodiment of the production mode with a negative flow of production energy, at least 60%, preferably at least 90% and most preferably at least 95% of the production energy is generated by exothermic chemical reactions occurring within the fluidized bed concurrent with the passage of the raw material stream.

Examples of raw materials that can contribute a negative flow of production energy in the production mode include reactive hydrocarbons, biomass, pyrolytic oil, carbon monoxide, water, steam, carbon, oxygen and combinations thereof. According to a particularly preferred embodiment, at least 50 wt.%, more preferably at least 70 wt.% and most preferably at least 80 wt.% of the raw material stream consists of the aforementioned raw materials. Preferably, the reactive hydrocarbons are selected from the group consisting of saturated and/or unsaturated C₁-C₂₀ alkanes, ketones, aldehydes and combinations thereof.

A variety of exothermic reactions can be executed in the production mode of the present method. Examples of processes having a negative flow of production energy that can occur in the fluidized bed during the production mode of the present method include oxidation, water gas shift reaction and combinations thereof.

In case the production mode yields a negative flow of production energy, energy can suitably be removed from the same fluidized bed during the restoration mode by employing a restoration stream containing one or more components selected from the group consisting of biomass, coal, water, steam, C₁-C₁₀ alkanes, and combinations thereof. Advantageously, at least 50 wt.% , more preferably at least 70 wt.% and most preferably at least 80 wt.% of the restoration stream consists of these components.

An example of such an exothermic reaction that can advantageously occur in the production mode of the present method is the water gas shift reaction. In this reaction CO and H₂O react to form H₂ and CO₂. Typically, the water gas shift reaction is carried out at a temperature of about 700 to 800 °C. Where there is no means employed of removing the associated reaction energy from the fluidized bed, the temperature prevailing in the fluidized bed increases up to a level where process conditions inside the fluidized bed and thermal conditions of the solid particles are no longer favourable for the desired water gas shift reaction.

The restoration of the process conditions inside the fluidized bed and of the thermal conditions of the solid particles in the bed can be carried out following several alternatives or combinations thereof. In accordance with one particular alternative, this is achieved by providing a cold gas or vapour flow during the restoration mode. This is an elegant option under circumstances where a source of cold gas or vapour is available and wherein the resulting heated gas or vapour stream is useful for other applications. For instance, if the coolant medium is steam and said steam is gaining superheat during this action, the restoration mode is in itself a productive mode for the generation of superheated steam. Thus, the given restoration mode of the water gas shift reaction is in itself a productive mode for the generation of superheated steam.

For a continuous method for making a product, it is advantageous to use two or more fluidized beds. Accordingly it is possible when using two fluidized beds that in one fluidized bed the production mode takes place and in another fluidized bed the restoration mode. By intermittently switching each fluidized bed from one mode to the other and having both fluidized beds not at the same time in the same production mode or in the same restoration mode, it is possible to carry out the method for making the product in a continuous manner. Under circumstances that the period of time for carrying out the production mode is not substantially the same as the time period for carrying out the restoration mode, it is possible to use different numbers of fluidized beds in the production mode and/or in the restoration mode.

Accordingly, an especially preferred embodiment of the present method employs at least two beds of fluidized solid particles that each are alternately operated in the production mode and the restoration mode, said at least two beds including a first bed that is operated in the production mode and a second bed that is simultaneously operated in the restoration mode, wherein the first bed is switched from the production mode to the restoration mode by diverting at least a part of the raw material stream from the first bed to the second bed and simultaneously the second bed is switched from the restoration mode to the production mode by diverting at least a part of the restoration stream from the second bed to the first bed when (i) the temperature of the fluidized solid particles in the first bed has increased to a preset maximum value or decreased to a preset minimum value or (ii) the temperature of the fluidized solid particles in the second bed has been restored to preset target value.

This particular set-up of the present method is particularly advantageous in case the production mode is endothermic and the restoration mode is exothermic and at least a part of the product stream generated during the production mode in either of the two beds is introduced as reactant into the restoration stream that is fed to the other bed. In a particularly preferred set-up of this embodiment the production mode comprises conversion by steam reforming of a raw material stream comprising water and a hydrocarbon and the restoration mode comprises conversion by water gas-shift reaction of a restoration stream comprising steam and at least a part of the carbon monoxide generated during the production mode. In this particularly advantageous embodiment of the present invention both the production mode and the restoration mode are productive as they both produce hydrogen.

The benefits of the present invention can be realised by operating the method in a manual or automatic fashion. Preferably, the method comprises monitoring the temperature of the fluidized solid particles and automatic switching between the production mode and the restoration mode in dependency of the measured temperature.

In the present method the production mode is advantageously carried out in an adiabatically insulated system, i.e. a system that does not use external heating or cooling.

It will be appreciated that the process of the present invention provides significantly lower investment and maintenance costs per unity of product, due to considerable savings in additional external equipment used in, and reduced control complexity of, prior art processes.

Another aspect of the invention relates to an apparatus for carrying out the method of the invention, comprising at least one vessel holding a bed of fluidizable solid particles, said vessel further comprising:
- one or more inlets for a fluidizing stream located at one side of the bed;
- one or more outlets located at the opposite side of the bed;
- primary switching means for alternately feeding the raw material stream or the restoration stream through the one or more inlets.

Advantageously, the aforementioned apparatus can suitably be used to operate two concurrent processes as described herein before, Accordingly, in a preferred embodiment, the apparatus comprises two or more of vessels holding a bed of fluidizable solid particles, including a first vessel and a second vessel, wherein the primary switching means is capable of redirecting the raw material stream from the first vessels to the second vessel whilst simultaneously redirecting the restoration stream from the second vessel or from another one of the two or more vessels to the first vessel. In a particularly advantageous embodiment of the latter apparatus at least one of the inlets of the first vessel is connected to at least one of the outlets of the second vessel and at least one of the inlets for the second vessel is connected to at least one of the outlets of the first vessel and the apparatus further contains secondary switching means for alternately feeding a stream from the outlet of one vessel to the inlet of the other vessel, wherein the operation of the secondary switching means is synchronized with the operation of the primary switching means.

Although the apparatus may be provided with various inlets, it can be practical that inlets are combined (likewise for the various outlets) and that sources for the various material streams can be switched onto one combined inlet or outlet, and that used restoration streams and ready products may be directed to different utilities from a combined outlet.

To adequately balance a production mode and a restoration mode of one fluidized bed reactor, or of an array of multiple fluidized bed reactors, it can be advantageous to operate sections of a fluidized bed in different fluidization regimes, such as bubbling, slugging or spouting. Advantages associated with this set-up are associated with the energy storage capacity and energy transfer capability of the solid bed particles in the different bed sections. The means for creating different fluidization regimes in distinguished bed sections include but are not limited to: the installation of internal draft tubes or baffles, and the installation and operation of utilities for modulated gas flows that are specifically heated or cooled.

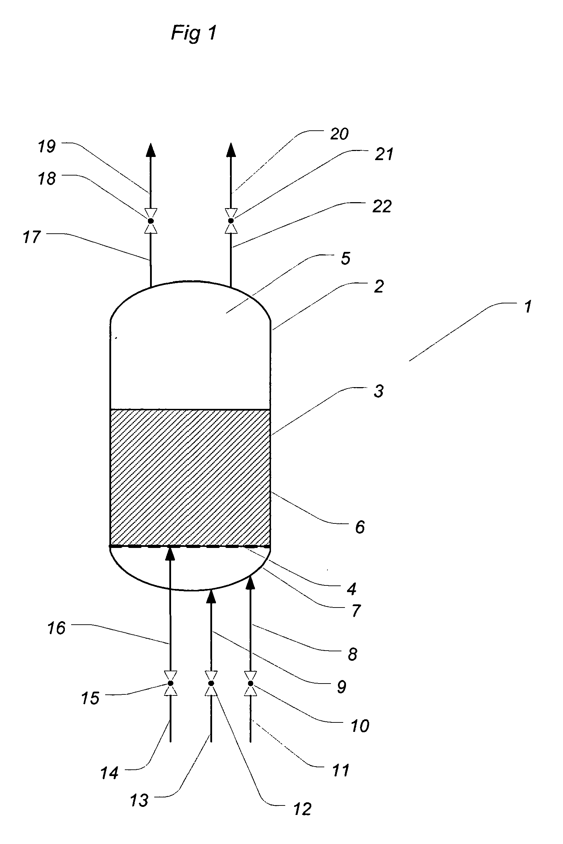

Figure 1 shows an apparatus **1** by means of which a biomass devolatilization may be carried out. The apparatus **1** comprises a fluidized bed unit **2** having a cylindrical fluidized bed reactor **3** provided at its bottom with a distribution plate **4** and at its top with a freeboard **5** for the separation of solid particles and fluidization medium.

In the reactor **3** is maintained a fluidized bed of sand particles **6** (at average particle size of about 0.4 mm) as is shown by the shaded area.

The fluidized bed **6** is provided with inlet **16**, which is connected via a valve **15** with a source of cold biomass **14**. A bottom section 7 of the reactor **3** is provided with two inlets **8** and **9**. The inlet **8** is connected via a valve **10** with a source of combustion air **11.** The inlet 9 is connected via a valve **12** with a source of fuel **13**.

The freeboard 5 is provided with two outlets **17** and **22**. Outlet **17** is connected via a valve **18** to an outlet for exhaust gas **19**. Outlet **22** is connected via valve **21** to an outlet for the devolatilization product **20**.

During the restoration mode valves **10** and **12** are open and thus combustion air and fuel are flown into the reactor **3**. Exhaust gas **19** leaves the apparatus **1** via the open valve **18**. The combustion energy is taken up by the sand particles, thereby are the process conditions reconstituted in the fluidized bed and the solid bed material brought into a temperature condition enabling the provision of process energy for the intended process during the subsequent production mode. After the process conditions have been reconstituted along with the capability of the sand particles to provide process energy, the valves **10**, **12** and **18** are closed and the valves **15** and **21** opened. Cold biomass **14** enters the reactor **3** and the devolatization of added biomass takes place within a temperature window of about 650-550 °C. Upon continuation of the devolatilization reaction, and as a result of the energy consumption of cold biomass for heating and/or of the chemical reaction (which may be or not be endothermic), the temperature of the fluidized bed **6** is no longer favourable for the desired devolatilization reaction and the sand particles comprising the fluidized bed **6** are no longer capable of providing the process energy at the desired temperature so that the devolatilization reaction will occur at a low rate and/or at a low yield. At such temperature (such as below 550 °C) the reactor **3** is switched to operation in the restoration mode as described above.

Figure 1 also serves to schematically illustrate a method and apparatus by means of which a dehydrogenation of C₃-C₄ paraffins (alkanes) to their corresponding monoolefins may be carried out. The dehydrogenation of C₃-C₄ paraffins is an example of an endothermic reaction, which is preferably carried out by using a solid chromium or platinum based catalyst, and at a temperature above 1000 °C to minimize the formation of by-products and to maximize yield. The catalyst solid matter may form part or all of the solid fluidized bed particles. During the production mode, according to the invention, valve **15** is opened to admit the C₃-C₄ paraffins into the fluidized bed reactor **3**. Thereby, the solid fluidized bed particles, by their cooling, will provide the process energy for carrying out the production mode, until the temperature of the fluidized bed is no longer favourable for the desired dehydrogenation reaction and the solid particles comprising the fluidized bed are no longer capable of providing the process energy at the desired temperature so that the dehydrogenation reaction will occur at a low rate and/or at a low yield. At such temperature the reactor **3** is switched to operation in the restoration mode as described above. In a preferred embodiment the restoration mode is carried out by the combustion of carbon deposited on the solid bed particles or otherwise present within the fluidized bed as a result of carbon formation during the production mode. The valve **12**, otherwise admitting fuel **13** into the fluidized bed reactor **3**, may then remain closed during the restoration mode. This intermittent method is an alternative for the continuous so-called Snamprogetti/Yarsintez process described by Domenico Sanfilippo, Franco Buonomo, Giorgio Fusco, Maria Lupieri and Ivano Niracca (Fluidized Bed Reactors For Paraffins Dehydrogenation, Chemical Engineering Science. Vol. 47, No. 9-11, pp. 2313-2318, 1992).

It is noted that at the start of the processes illustrated by Figure 1, when the fluidized bed is not yet suitably conditioned for operation in production mode, it is possible to apply via inlet **8** or **9** a hot gas or vapour, or alternatively a fuel can be provided via inlet **9** for combustion inside the fluidized bed.

It is noted that the single apparatus **1** comprising one fluidized bed reactor, may be intermittently operated in between a production mode and a restoration mode. The resulting method is then discontinuous in relation to the making of process product. If the making of process product is desired to be continuous then it is possible to use two or more fluidized bed reactors such that at least one fluidized bed reactor is in the production mode and at least one fluidized bed reactor is in the restoration mode. Accordingly, there is a continuous making of process product.

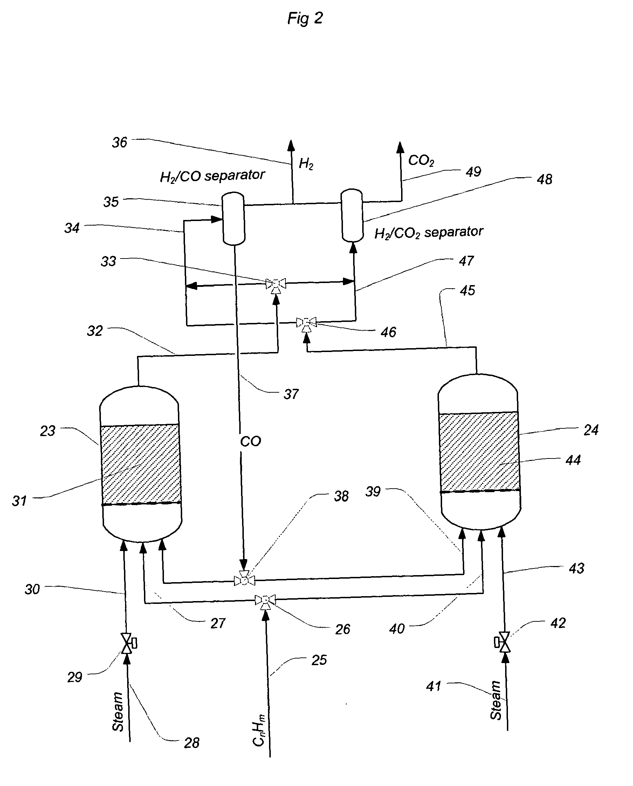

Figure 2 describes another apparatus according to the invention, comprising two fluidized bed reactors **23** and **24** which are intermittently but not concomitantly operative in different modes. The reactors **23** and **24** have substantially the same construction as described in relation to the fluidized bed reactor **2** in Figure 1.

In one production mode, hydrocarbons CₙH₂ₙ₊₂ are added via inlet **25** and three-way valve **26** to inlet **27** of the fluidized bed reactor **23**. Steam is added via inlet **28**, dosage valve **29**, and inlet **30** to the fluidized bed reactor **23**. The reaction carried out in fluidized bed reactor **23** is steam reforming, which is a conversion of hydrocarbons to carbon monoxide and hydrogen. In the fluidized bed reactor **23** solid particles **31** comprising Ni based catalysts are maintained in a fluidized bed. This catalyst supports the steam reforming reaction, which is carried out at elevated temperatures of 500-1100 °C, and which is endothermic. Continued operation of fluidized bed reactor **23** in this production mode, in the absence of specific means for the provision of heat, results in a gradual temperature decrease of the solid fluidized bed particles **31.**

Via outlet **32**, three-way valve **33** and inlet **34**, the reaction product is added to a separation unit **35** in which hydrogen **36** and carbon monoxide **37** are separated, and the hydrogen **36** removed as the product.

The carbon monoxide **37** is fed to the fluidized bed reactor **24** via the three-way valve **38** and inlet **39**. Via dosage valve **42** and inlet **43** is supplied steam **41**. In the fluidized bed reactor **24** solid particles **44** comprising a catalyst for the water gas shift reaction are maintained in a fluidized mode. These catalyst particles are MnCu and/or Ni based. Suitably, the water gas shift reaction is carried out at a temperature of about 700 to 800 °C, which is lower than the preferred temperature for the steam reforming reaction, and the reaction is exothermic. Due to this exothermic character, and in the absence of specific means for cooling, continued operation of fluidized bed reactor **24** in this production mode, results in a gradual temperature increase of the solid fluidized bed particles **44**, beyond the upper limit of a suitable reaction temperature range for the water gas shift reaction.

Via outlet **45**, three-way valve **46**, and inlet **47**, the reaction product is fed to a separation unit **48** separating hydrogen **36** from carbon dioxide **49**, and the hydrogen **36** removed as the product.

The two fluidized bed reactors **23** and **24** being operated simultaneously, and each of which making another product mixture, the temperature of one fluidized bed reactor gradually increases whereas the temperature of the other gradually decreases up to temperature ranges where the respective productions are no longer effective and/or efficient. According to the invention it is possible to intermittently operate the individual fluidized bed reactors **23** and **24** in subsequent steam reforming and water gas shift reaction modes, in such a manner that when one fluidized bed reactor is operated to carry out steam reforming, the other fluidized bed reactor is operated to carry out the water gas shift reaction. For this operation to be carried out properly, it is required that the three-way valves **26**, **33**, **38** and **46** are suitably switched, and the dosage valves **29** and **42** suitably controlled. Considering one single fluidized bed reactor of the two reactors **23** and **24**, the production mode of hydrogen manufacture by means of the water gas shift reaction, due to the increasing temperature of the solid particles as a result of the reaction's exothermic character, serves as the restoration mode for the making of hydrogen by means of the steam reforming reaction, which is the subsequent production mode carried out in that fluidized bed reactor. In turn, the subsequent production mode of the steam reforming reaction, due to the decreasing temperature of the solid bed particles as a result of that reaction's endothermic character, carried out in the considered fluidized bed reactor, serves as the restoration mode for the making of hydrogen by means of the water gas shift reaction, which is the subsequent production mode carried out in that fluidized bed reactor.

Obviously, the catalytic particle systems used for the steam reforming reaction and for the water gas shift reaction are to be selected such that preferably both catalyst systems could be present in one and the same reactor for carrying out under the appropriate reactions conditions the characteristic catalytic reaction.

For the skilled person it will be routine to decide at what stage a fluidized bed reactor is to be changed from one mode to another. Such decision may be dependent on residing temperatures, reaction enthalpies, heat capacities of solid particles, and those of reconstituting fluidums, and reactants, the reaction rate and the yield of the reaction products, and other items. It will also be routine for the skilled person to design an apparatus consisting of a fluidized bed reactor, or of a combination of multiple fluidized bed reactors acting together, in production modes and restoration modes. Such design may be dependent on the residing temperatures, reaction enthalpies, the heat capacities of solid particles, of reconstituting fluidums, and reactants, the reaction rate and the yield of the reaction products, and other items.

According to a more preferred embodiment of the present invention, biomass or polymer waste is pyrolysed in the production mode while a fuel is combusted with air in the restoration mode.

The invention is further illustrated by means of the following non-limiting examples.

### EXAMPLES

### Example 1

This example illustrates the use of the present method for producing superheated steam of 750-850 °C at atmospheric pressure from saturated steam at the same pressure. The method described utilized a fluid bed reactor as depicted in Figure 1.

In the restoration mode the fluidized bed reactor was heated to 850 °C by means of coal and combustion air. This raw material stream also acted as fluidization medium. Mode switching was carried out when the temperature of the fluidized bed reached the aforementioned target value of 850 °C by halting the flows of coal and combustion air, and starting a flow of saturated steam which also acted as fluidization medium. The exit of the fluidized bed reactor was simultaneously switched from flue gas to superheated steam (and the steam can be fed into a steam drum). The outlet steam was superheated at a temperature that is essentially equal to the temperature of the fluidized bed.

During the production mode, the temperature of the fluidized bed gradually decreased as a result of heat transfer from the solid bed particles to the steam. When the superheated steam temperature reached the lower end of the desired temperature range (in this example 750 °C), the fluidized bed reactor was switched back to restoration mode and a raw material stream of coal and air was again fed into the bed instead of the flow of saturated steam. Simultaneously, the gas exit of the fluidized bed reactor was connected to a flue gas duct.

### Example 2

This example illustrates the use of the present method for producing pyrolytic oil and vapour from biomass. Again, the method utilized a fluid bed reactor as depicted in Figure 1. The fluidized bed consisted of sand particles (average diameter = 0.5 mm).

In the restoration mode the fluidized bed reactor was heated to 540 °C by combusting natural gas and air inside the fluidized bed. This mixture of raw materials and the resulting combustion products also acted as fluidization medium. Mode switching was carried out when the temperature of the fluidized bed reached the target value by halting the raw material flows of natural gas and combustion air, and starting a flow of inert gas (nitrogen) through the bed to bring it into a regime of minimum fluidization. In addition to nitrogen, the raw material stream contained cold biomass particles that had been processed such that they properly mixed with the sand under the conditions of the fluidization regime that resulted from the pyrolysis reaction. The biomass had been ground to a particle size of less than 2 mm and dried to a moisture content of 0% to ensure optimum intra-biomass heat transfer for the pyrolysis reaction to occur and to minimize energy usage for water evaporation.

During the production mode, the temperature of the fluidized bed decreased as a result of the endothermic pyrolysis of the biomass and of its heating to the reactor temperature. When the fluidized bed reached the lower end of the desired temperature range (of 460 °C), the fluidized bed reactor was switched back to restoration mode.

### Example 3

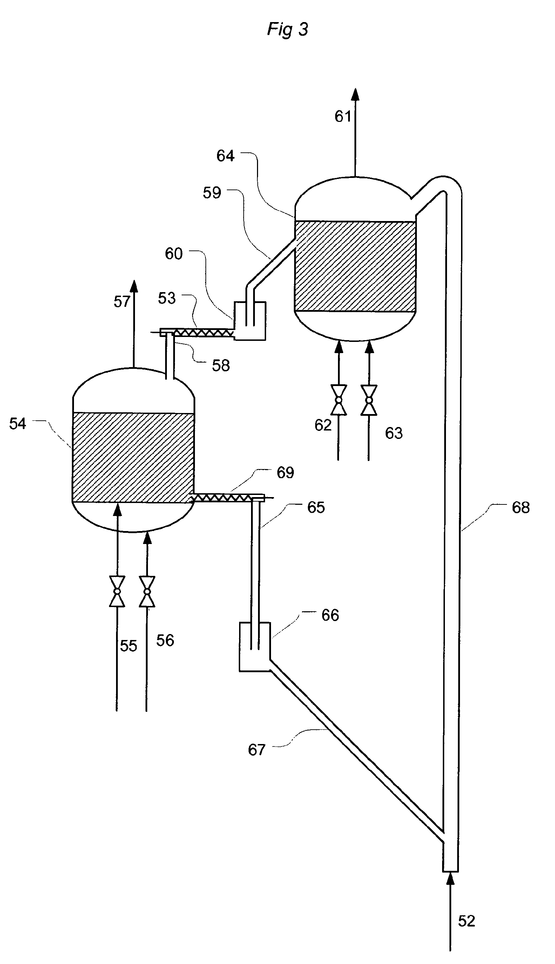

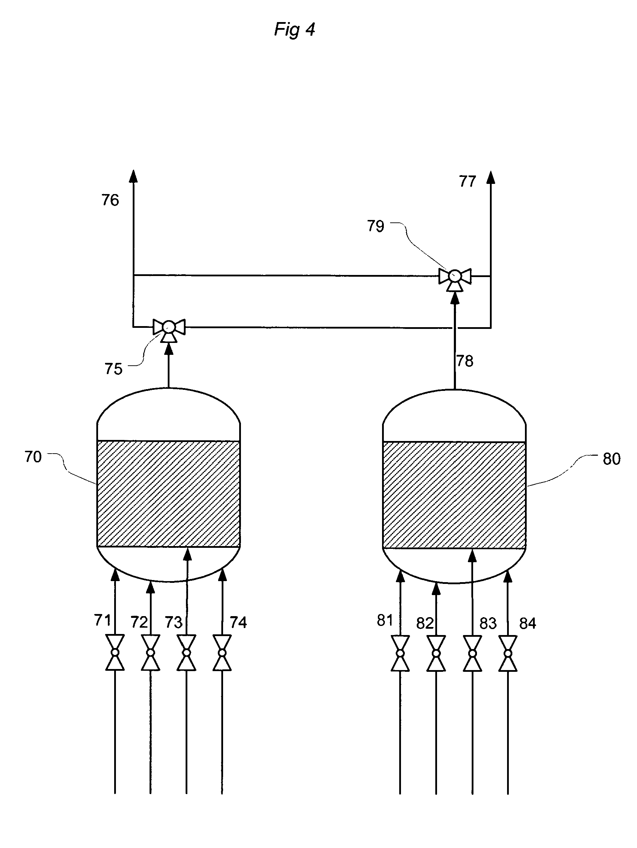

Figures 3 and 4 show two configurations of the same processes carried out in fluidized bed reactors. Figure 3 is according to existing art by means of stationary fluidized bed processes, and Figure 4 is according to the invention by means of intermittently operated fluidized beds. The primary process is pyrolytic liquefaction of biomass and the energy for that process is provided by means of a combustion reaction. The pyrolytic liquefaction reaction can be favourably carried out inside a fluidized bed of hot sand particles in the absence of air, and within a range of suitable temperatures that is at least 80 °C wide, e.g. between 460 and 540 °C which can be derived from "Fast pyrolysis of sweet sorghum and sweet sorghum bagasse", Journal of Analytical and Applied Pyrolysis, Volume 46, Issue 1, June 1998, Pages 15-29, Jan Piskorz, Piotr Majerski, Desmond Radlein, Donald S. Scott, A. V. Bridgwater, in particular page 24, Fig. 6.

In Figure 3, Reactor **54** is the pyrolytic liquefaction reactor. It is fed with biomass at ambient temperature as the raw material via line **55**, and an inert gas such as nitrogen is provided as a fluidization medium via line **56**. (Alternative gases that may serve this purpose are non-condensed process gases.) Inside Reactor **54** the raw material is heated to the bed temperature of 480 °C and it decomposes into product vapour, the temperature of which equals the bed temperature. The product vapour is removed from Reactor **54** via line **57**. The process consumes energy, and this is supplied by a flow of heated sand from Reactor **64**, e.g. at a temperature of 800 °C, which is essentially higher than the desired process temperature of Reactor **54** (here 480 °C). This flow of heated sand is enabled by gravity, and a number of devices including a Sand Supply Pipe **58**, a Sand Extraction Screw acting as flow regulator **53**, a Sand Lock **60**, and a Stand Pipe **59**. These devices are required because it is essential to control the flow of heated sand while avoiding the mixing of reactants and regeneration gases. Inside Reactor **64** a combustion reaction is carried out at the desired sand supply temperature. To this end fuel and combustion air are provided. In some cases all or part of the fuel may already be present in the form of charcoal contained inside the relatively cool sand that is fed into Reactor **64** to balance the sand flow into Reactor **54**. The sand taken from Reactor **64** to supply energy to Reactor **54** is balanced by a feed of sand into Reactor **64** that is provided by means of a riser (driven by air through line **52**) that transfers sand taken from Reactor **54**. In some cases this riser may be a belt conveyor or a bucket elevator, or another mechanical device. Additional devices needed to enable a transfer of sand from Reactor **54** to Reactor **64** include: a frequency controlled Extraction Screw **69** or another mechanical means of solids flow regulation (such as a temperature resistant Pinch Valve), a Stand Pipe **65**, a Sand Lock **66** and a Sand Transfer Pipe **67**. These devices are required because it is essential to control the flow of heated sand while avoiding the mixing of reactants and regeneration gases. The temperature of the sand removed from Reactor **54** is equal to the temperature of the fluidized bed inside Reactor **54**. The process is carried out continuously.

In Figure 4, each of the Reactors **70** and **80** acts as a pyrolytic liquefaction Reactor and a combustion reactor, however not at the same moment in time, but rather intermittently. In this specific case the two reactors are operated in counter phase, i.e. such that if one is operated in a pyrolytic liquefaction mode that is limited in time, the other is operated in a combustion mode that is limited by the same time interval, and after the time interval has expired the respective operational modes are being switched from pyrolytic liquefaction to combustion and vice versa. Take, for the sake of argument, a moment in time at which Reactor **70** is in the mode of pyrolytic liquefaction and Reactor 80 in the mode of combustion. At that moment, Reactor **70** is fed with biomass at ambient temperature as the raw material via line **73**, and an inert gas such as nitrogen is provided as a fluidization medium via line **74**. Alternative gases that may serve this purpose are non-condensed process gases. Inside Reactor **70** the raw material is heated to the bed temperature and it decomposes into product vapour, the temperature of which equals the bed temperature. The product vapour is removed from Reactor **70** via valve **75** and line **77**. The process consumes energy, and this is supplied by the fluidized bed inside Reactor **70**. While providing the energy, the fluidized bed inside Reactor **70** cools down. This process is continued until the temperature of the fluidized bed inside Reactor **70** reaches a temperature that is too low for maintaining a favourable pyrolytic liquefaction reaction. At that moment the operational mode of Reactor **70** is switched from pyrolytic liquefaction to combustion. To this end, the feed of raw material is halted, and fuel and combustion air are provided to Reactor **70** via lines **71** and **72** respectively. In some cases all or part of the fuel may already be present in the form of charcoal remaining as a residue inside Reactor **70**. As a result of combustion, the temperature conditions of the fluidized bed inside Reactor **70** are restored, and the intermittent cycle of pyrolytic liquefaction followed by combustion is repeated. Operation of Reactor **80** in counter-phase to Reactor **70** enables a continuous productive process. The actually prevailing mode duration is dependent upon the design parameters such as production capacity and bed size. The mode of pyrolytic liquefaction, which is the primary process objective, may e.g. last 30 minutes, and the restoration mode of combustion may last 5 minutes.

In below table the two systems are compared.

| **Stationary fluid bed with external solids circulation for pyrolytic liquefaction of biomass** | **Intermittent fluid bed for pyrolytic liquefaction of biomass** |
|---|---|
| In addition to the major process reactor, at least one other reactor is required to reconstitute the bed solids. | One reactor is sufficient for carrying out the process of the invention, but to enable the comparison of a continuous process two reactors were used in Example 3. |
| Devices enabling external solids circulation are required. While allowing the flow of solids, those devices should prevent undesired flows of gases (back-mixing, forward mixing). Those devices should be resistant to high temperature, higher than in the case of an intermittent fluid bed. Those devices should be resistant to wear. Those devices need temperature and flow controls. Those devices need operational power (e.g. for a blower inducing a riser). | External solids circulation is omitted. On/off gas-flow valves are required to switch the process. Those valves should be resistant to the prevailing temperatures (460-540 °C). |
| The process conditions of the major process can be fixed at set-point to optimize production. | The process conditions of the major process oscillate around an optimum. |

It will be appreciated from said table that the concept of an intermittent fluid bed for pyrolytic liquefaction of biomass bears a number of advantages over a stationary fluid bed with external solids circulation. Those advantages are in terms of less control complexity, less reactors, less solids transfer devices, less exposure to wear, less operational power. It is reasonable to expect that the intermittent fluid bed for pyrolytic liquefaction of biomass is twice less costly than the stationary fluid bed with external solids circulation, both in terms of investment (equipment) and operational costs (power and maintenance). A disadvantage of an intermittent fluid bed for pyrolytic liquefaction of biomass is the oscillation of process conditions, which may result into a lower product yield as a ratio of raw material input. The productivity reduction could be as much as 5%.

### Example 4

A pyrolysis process of polyethylene waste according to the present invention in one fluidized bed reactor is operated intermittently within a temperature range of from 290 °C to 340 °C. The production mode (pyrolysis) starts at 340 °C and the fluidized bed is allowed to cool until a temperature of 290 °C has been reached. As from that moment the fluidized bed is re-heated by combusting the coal formed inside the bed during the production mode (pyrolysis) by feeding air and optionally an additional fuel (restoration mode), until the bed reaches the starting temperature of 340 °C again. The cycle can be repeated as long as required and the fluidized solid particles remain inside the same reactor. The product yield appears to vary within acceptable ranges.

## Claims

1. A method of converting a raw material stream into a product stream by passing said raw material stream through a bed of fluidized solid particles and allowing heat exchange to occur between the bed of fluidized solid particles and the raw material stream, said method being **characterized in that** it alternately employs a production mode and a restoration mode to control the temperature of the fluidized solid particles:
• said production mode comprising passing the raw material stream through the bed of fluidized solid particles and allowing the temperature of the fluidized solid particles to decrease or to increase as a result of the production energy associated with the conversion of the raw material stream into the product stream; and
• said restoration mode comprising restoring the temperature of the bed of fluidized solid particles by passing a restoration stream through the bed of fluidized solid particles to decrease the temperature of the fluidized solid particles in case the temperature of the fluidized solid particles has increased during the production mode or to increase the temperature of the fluidized solid particles in case the temperature of the fluidized solid particles has decreased during the production mode;
• and that the fluidized solid particles are kept in the same reactor.

2. Method according to claim 1, wherein the production mode is continued until the temperature of the fluidized solid particles has either increased to a preset maximum value or decreased to a preset minimum value and wherein during the subsequent restoration mode the temperature of the fluidized solid particles is restored to a preset target value.

3. Method according to any one of the claims 1 or 2, wherein the duration of the production mode is 1-200 minutes and the duration of the restoration mode is 0.5-60 minutes.

4. Method according to any one of the claims 1-3, wherein the method comprises an uninterrupted sequence of at least 3 production modes and at least 3 restoration modes.

5. Method according to claims 1-4, wherein during the production mode an endothermic chemical reaction of reactants contained in the raw material stream occurs in the fluidized bed

6. Method according to any one of the claims 1-5, wherein at least 20%, preferably at least 30% of the production energy is provided by the restoration stream.

7. Method according to any one of the claims 1-6, wherein the temperature of the fluidized solid particles decreases by at least 10 °C, preferably by at least 20 °C and most preferably by at least 30 °C during the production mode.

8. Method according to claims 5-7, wherein the restoration stream comprises an energy carrier selected from the group consisting of hot gasses, hot vapours, hot liquids, or reactants that react exothermically under the conditions prevailing in the bed of fluidized solid particles during the restoration mode and combinations thereof.

9. Method according to any one of claims 5-8, wherein during the restoration mode the fluidized solid particles catalyse an exothermic chemical reaction of reactants contained in the restoration stream.

10. Method according to any one of claims 5-9, wherein during the restoration mode an exothermic chemical reaction occurs between reactants contained in the restoration stream and matter that was accumulated in the bed of fluidized solid particles during the production mode.

11. Method according to any one of claims 1-4, wherein the temperature of the fluidized solid particles in the bed increases by at least 10 °C, preferably by at least 20 °C and most preferably by at least 30 °C during the production mode.

12. Method according to claims 1-4, wherein during the production mode an exothermic chemical reaction of reactants contained in the raw material stream occurs in the fluidized bed.

13. Method according to claim 11 or 12, wherein the restoration stream comprises an energy carrier selected from the group consisting of cold gasses, cold vapours, cold liquids, or reactants that react endothermically under the conditions prevailing in the bed of fluidized solid particles during the restoration mode and combinations thereof.

14. Method according to any one of claims 11-13, wherein during the restoration mode the fluidized solid particles catalyse an endothermic chemical reaction of reactants contained in the restoration stream.

15. Method according to any one of the claims 1-14, wherein the method employs at least two beds of fluidized solid particles that each are alternately operated in the production mode and the restoration mode, said at least two beds including a first bed that is operated in the production mode and a second bed that is simultaneously operated in the restoration mode, wherein the first bed is switched from the production mode to the restoration mode by diverting at least a part of the raw material stream from the first bed to the second bed and simultaneously the second bed is switched from the restoration mode to the production mode by diverting at least a part of the restoration stream from the second bed to the first bed when (i) the temperature of the fluidized solid particles in the first bed has increased to a preset maximum value or decreased to a preset minimum value or (ii) the temperature of the fluidized solid particles in the second bed has been restored to preset target value.

16. Method according to claim 15, wherein the production mode is endothermic and the restoration mode is exothermic and wherein at least a part of the product stream generated during the production mode in either of the two beds is introduced as reactant into the restoration stream that is fed to the other bed.

17. Method according to claim 16, wherein the production mode comprises conversion by steam reforming of a raw material stream comprising water and a hydrocarbon and wherein the restoration mode comprises conversion by water gas-shift reaction of a restoration stream comprising steam and at least a part of the carbon monoxide generated during the production mode.

18. Method according to claims 1-10, wherein biomass or polymer waste is pyrolysed in the production mode, while a fuel and preferably natural gas is combusted with air in the restoration mode.

19. An apparatus for carrying out a method as defined in any one of the preceding claims, said apparatus comprising at least one vessel holding a bed of fluidizable solid particles, said vessel further comprising:
• one or more inlets for a fluidizing stream located at one side of the bed;
• one or more outlets located at the opposite side of the bed;
• primary switching means for alternately feeding the raw material stream or the restoration stream through the one or more inlets.

20. Apparatus according to claim 19, said apparatus comprising two or more of the vessels holding a bed of fluidizable solid particles, including a first vessel and a second vessel, wherein the primary switching means is capable of redirecting the raw material stream from the first vessels to the second vessel whilst simultaneously redirecting the restoration stream from the second vessel or from another one of the two or more vessels to the first vessel.

21. Apparatus according to claim 20, wherein at least one of the inlets of the first vessel is connected to at least one of the outlets of the second vessel and wherein at least one of the inlets for the second vessel is connected to at least one of the outlets of the first vessel and wherein the apparatus further contains secondary switching means for alternately feeding a stream from the outlet of one vessel to the inlet of the other vessel, wherein the operation of the secondary switching means is synchronized with the operation of the primary switching means.

## Patentansprüche

1. Verfahren zur Umwandlung eines Rohmaterialstroms in einen Produktstrom, bei dem der Rohmaterialstrom ein Bett aus verflüssigten Feststoffteilchen durchströmt und ein Wärmeaustausch zwischen dem Bett aus verflüssigten Feststoffteilchen und dem Rohmaterialstrom ermöglicht wird, wobei das Verfahren **dadurch gekennzeichnet ist, dass** abwechselnd ein Produktionsmodus und ein Rückstellungsmodus angewendet werden, um die Temperatur der verflüssigten Feststoffteilchen zu steuern:
• wobei der Produktionsmodus das Strömen des Rohmaterialstroms durch das Bett aus verflüssigten Feststoffteilchen und das Ermöglichen der Erhöhung oder der Verringerung der Temperatur der verflüssigten Feststoffteilchen als Ergebnis der Produktionsenergie umfasst, die mit der Umwandlung des Rohmaterialstroms in den Produktstrom verbunden ist; und
• wobei der Rückstellungsmodus die Rückstellung der Temperatur des Bettes aus verflüssigten Feststoffteilchen durch Strömen eines Rückstellungsstroms durch das Bett aus verflüssigten Feststoffteilchen umfasst, um die Temperatur der verflüssigten Feststoffteilchen zu verringern, falls sich die Temperatur der verflüssigten Feststoffteilchen während des Produktionsmodus erhöht hat, oder um die Temperatur der verflüssigten Feststoffteilchen zu erhöhen, falls sich die Temperatur der verflüssigten Feststoffteilchen während des Produktionsmodus verringert hat;
• und dass die verflüssigten Feststoffteilchen im gleichen Reaktor gehalten werden.

2. Verfahren nach Anspruch 1, wobei der Produktionsmodus fortgesetzt wird, bis sich die Temperatur der verflüssigten Feststoffteilchen entweder auf einen voreingestellten Maximalwert erhöht oder auf einen voreingestellten Minimalwert verringert hat, und wobei während des nachfolgenden Rückstellungsmodus die Temperatur der verflüssigten Feststoffteilchen auf einen voreingestellten Zielwert rückgestellt wird.

3. Verfahren nach einem der Ansprüche 1 oder 2, wobei die Dauer des Produktionsmodus 1 bis 200 Minuten ist und die Dauer des Rückstellungsmodus 0,5 bis 60 Minuten beträgt.

4. Verfahren nach einem der Ansprüche 1 bis 3, wobei das Verfahren eine ununterbrochene Folge von zumindest 3 Produktionsmodi und zumindest 3 Rückstellungsmodi umfasst.

5. Verfahren nach einem der Ansprüche 1 bis 4, wobei während des Produktionsmodus eine endotherme chemische Reaktion der Reaktanten, die im Rohmaterialstrom enthalten sind, im verflüssigten Bett auftritt.

6. Verfahren nach einem der Ansprüche 1 bis 5, wobei mindestens 20%, vorzugsweise mindestens 30% der Produktionsenergie durch den Rückstellungsstrom bereitgestellt werden.

7. Verfahren nach einem der Ansprüche 1 bis 6, wobei die Temperatur der verflüssigten Feststoffteilchen um mindestens 10 °C, vorzugsweise um mindestens 20 °C und noch besser um mindestens 30 °C während des Produktionsmodus verringert wird.

8. Verfahren nach einem der Ansprüche 5 bis 7, wobei der Rückstellungsstrom einen Energieträger umfasst, der aus der Gruppe bestehend aus heißen Gasen, heißen Dämpfen, heißen Flüssigkeiten oder Reaktanten, die unter den Bedingungen, die im Bett aus verflüssigten Feststoffteilchen während des Rückstellungsmodus vorherrschen, exotherm reagieren, und Kombinationen davon gewählt wird.

9. Verfahren nach einem der Ansprüche 5 bis 8, wobei die verflüssigten Feststoffteilchen während des Rückstellmodus eine exotherme chemische Reaktion von Reaktanten katalysieren, die im Rückstellungsstrom enthalten sind.

10. Verfahren nach einem der Ansprüche 5 bis 9, wobei während des Rückstellmodus eine exotherme chemische Reaktion zwischen Reaktanten, die im Rückstellungsstrom enthalten sind, und Substanzen, die sich während des Produktionsmodus im Bett aus verflüssigten Feststoffteilchen angesammelt haben, auftritt.

11. Verfahren nach einem der Ansprüche 1 bis 4, wobei die Temperatur der verflüssigten Feststoffteilchen im Bett während des Produktionsmodus um mindestens 10 °C, vorzugsweise um mindestens 20 °C und noch besser um mindestens 30 °C erhöht wird.

12. Verfahren nach einem der Ansprüche 1 bis 4, wobei während des Produktionsmodus eine exotherme chemische Reaktion von Reaktanten, die im Rohmaterialstrom enthalten sind, im verflüssigten Bett auftritt.

13. Verfahren nach einem der Ansprüche 11 oder 12, wobei der Rückstellungsstrom einen Energieträger umfasst, der aus der Gruppe bestehend aus kalten Gasen, kalten Dämpfen, kalten Flüssigkeiten oder Reaktanten, die unter den Bedingungen, die im Bett aus verflüssigten Feststoffteilchen während des Rückstellungsmodus vorherrschen, endotherm reagieren, und Kombinationen davon gewählt wird.

14. Verfahren nach einem der Ansprüche 11 bis 13, wobei die verflüssigten Feststoffteilchen während des Rückstellmodus eine endotherme chemische Reaktion von Reaktanten katalysieren, die im Rückstellungsstrom enthalten sind.

15. Verfahren nach einem der Ansprüche 1 bis 14, wobei das Verfahren mindestens zwei Betten aus verflüssigten Feststoffteilchen anwendet, die jeweils abwechselnd im Produktionsmodus und Rückstellungsmodus betrieben werden, wobei die mindestens zwei Betten ein erstes Bett, welches im Produktionsmodus betrieben wird, und ein zweites Bett umfassen, welches gleichzeitig im Rückstellungsmodus betrieben wird, wobei das erste Bett durch Umleitung von mindestens einem Teil des Rohmaterialstroms vom ersten Bett in das zweite Bett vom Produktionsmodus in den Rückstellungsmodus umgeschaltet wird und gleichzeitig das zweite Bett durch Umleitung von mindestens einem Teil des Rückstellungsstroms vom zweiten Bett in das erste Bett vom Rückstellungsmodus in den Produktionsmodus umgeschaltet wird, wenn (i) sich die Temperatur der verflüssigten Feststoffteilchen im ersten Bett bis auf einen voreingestellten Maximalwert erhöht oder auf einen voreingestellten Minimalwert verringert hat oder (ii) die Temperatur der verflüssigten Feststoffteilchen im zweiten Bett auf einen voreingestellten Zielwert rückgestellt wurde.

16. Verfahren nach Anspruch 15, wobei der Produktionsmodus endotherm und der Rückstellungsmodus exotherm ist, und wobei mindestens ein Teil des Produktstroms, der während des Produktionsmodus in einem der zwei Betten generiert wird, als Reaktant in den Rückstellungsstrom eingeleitet wird, der dem anderen Bett zugeführt wird.

17. Verfahren nach Anspruch 16, wobei der Produktionsmodus die Umwandlung eines Wasser und Kohlenwasserstoff umfassenden Rohmaterialstroms mittels Dampfreformierung umfasst, und wobei der Rückstellungsmodus die Umwandlung mittels Wassergas-Shift-Reaktion eines Rückstellungstroms umfasst, der Dampf und mindestens einen Teil des Kohlenmonoxids umfasst, das während des Produktionsmodus generiert wird.

18. Verfahren nach einem der Ansprüche 1 bis 10, wobei im Produktionsmodus Biomasse oder Polymerabfall thermisch zersetzt wird, während im Rückstellungsmodus ein Brennstoff, und vorzugsweise Erdgas, mit Luft verbrannt wird.

19. Vorrichtung zum Ausführen eines Verfahrens, wie es in einem der vorhergehenden Ansprüche beschrieben ist, wobei die Vorrichtung mindestens ein Gefäß umfasst, das ein Bett aus verflüssigbaren Feststoffteilchen aufnimmt, wobei das Gefäß ferner Folgendes umfasst:
• eine oder mehrere Einlassöffnungen für einen verflüssigten Strom an einer Seite des Bettes;
• eine oder mehrere Auslassöffnungen an der gegenüberliegenden Seite des Bettes;
• primäre Schaltmittel zum abwechselnden Zuführen des Rohmaterialstroms oder des Rückstellungsstroms durch die eine oder mehrere Einlassöffnungen.

20. Vorrichtung nach Anspruch 19, wobei die Vorrichtung zwei oder mehrere der Gefäße umfasst, die ein Bett aus verflüssigbaren Feststoffteilchen aufnehmen, einschließlich eines ersten Gefäßes und eines zweiten Gefäßes, wobei das primäre Schaltmittel imstande ist, den Rohmaterialstrom vom ersten Gefäß zum zweiten Gefäß umzuleiten und gleichzeitig den Rückstellungsstrom vom zweiten Gefäß oder von einem anderen der zwei oder mehr Gefäße zum ersten Gefäß umzuleiten.

21. Vorrichtung nach Anspruch 20, wobei mindestens eine der Einlassöffnungen des ersten Gefäßes mit mindestens einer der Auslassöffnungen des zweiten Gefäßes verbunden ist, und wobei mindestens eine der Einlassöffnungen für das zweite Gefäß mit mindestens einer der Auslassöffnungen des ersten Gefäßes verbunden ist, und wobei die Vorrichtung des Weiteren sekundäre Schaltmittel umfasst, um abwechselnd einen Strom von der Auslassöffnung eines Gefäßes zur Einlassöffnung des anderen Gefäßes zuzuführen, wobei der Betrieb der sekundären Schaltmittel mit dem Betrieb der primären Schaltmittel synchronisiert ist.

## Revendications

1. Procédé de conversion d'un courant de matière brute en courant de produit, en passant ledit courant de matière brute à travers un lit de particules solides fluidisées et en permettant à un échange thermique de se produire entre le lit de particules solides fluidisées et le courant de matière brute, ledit procédé étant **caractérisé en ce qu'**il utilise en alternance un mode de production et un mode de restauration pour réguler la température des particules solides fluidisées :
• ledit mode de production comprenant le passage du courant de matière brute à travers le lit de particules solides fluidisées et le fait de permettre à la température des particules solides fluidisées de diminuer ou d'augmenter en raison de l'énergie de production associée à la conversion du courant de matière brute en courant de produit ; et
• ledit mode de restauration comprenant la restauration de la température du lit de particules solides fluidisées par le passage d'un courant de restauration à travers le lit de particules solides fluidisées pour diminuer la température des particules solides fluidisées si la température des particules solides fluidisées a augmenté pendant le mode de production ou pour augmenter la température des particules solides fluidisées si la température des particules solides fluidisées a diminué pendant le mode de production ;
• et **en ce que** les particules solides fluidisées sont conservées dans le même réacteur.

2. Procédé selon la revendication 1, dans lequel le mode de production est poursuivi jusqu'à ce que la température des particules solides fluidisées ait augmenté jusqu'à une valeur maximale prédéterminée ou diminué jusqu'à une valeur minimale prédéterminée et dans lequel, pendant le mode de restauration qui suit, la température des particules solides fluidisées est restaurée à une valeur cible prédéterminée.

3. Procédé selon la revendication 1 ou 2, dans lequel la durée du mode de production est de 1 minute à 200 minutes et la durée du mode de restauration est de 0,5 minute à 60 minutes.

4. Procédé selon l'une quelconque des revendications 1 à 3, dans lequel le procédé comprend une séquence ininterrompue d'au moins 3 modes de production et d'au moins 3 modes de restauration.

5. Procédé selon les revendications 1 à 4, dans lequel, pendant le mode de production, une réaction chimique endothermique des réactifs contenus dans le courant de matière brute se produit dans le lit fluidisé.

6. Procédé selon l'une quelconque des revendications 1 à 5, dans lequel au moins 20%, de préférence au moins 30% de l'énergie de production est fournie par le courant de restauration.

7. Procédé selon l'une quelconque des revendications 1 à 6, dans lequel la température des particules solides fluidisées diminue d'au moins 10°C, de préférence d'au moins 20°C et de manière préférée entre toutes d'au moins 30°C pendant le mode de production.

8. Procédé selon l'une quelconque des revendications 5 à 7, dans lequel le courant de restauration comprend un vecteur d'énergie choisi dans le groupe constitué par les gaz chauds, les vapeurs chaudes, les liquides chauds ou les réactifs qui réagissent de manière exothermique dans les conditions régnant dans le lit de particules solides fluidisées pendant le mode de restauration, et leurs combinaisons.

9. Procédé selon l'une quelconque des revendications 5 à 8, dans lequel, pendant le mode de restauration, les particules solides fluidisées catalysent une réaction chimique exothermique des réactifs contenus dans le courant de restauration.

10. Procédé selon l'une quelconque des revendications 5 à 9, dans lequel, pendant le mode de restauration, une réaction chimique exothermique se produit entre les réactifs contenus dans le courant de restauration et la matière qui s'est accumulée dans le lit de particules solides fluidisées pendant le mode de production.

11. Procédé selon l'une quelconque des revendications 1 à 4, dans lequel la température des particules solides fluidisées dans le lit augmente d'au moins 10°C, de préférence d'au moins 20°C et de manière préférée entre toutes d'au moins 30°C pendant le mode de production.

12. Procédé selon l'une quelconque des revendications 1 à 4, dans lequel, pendant le mode de production, une réaction chimique exothermique des réactifs contenus dans le courant de matière brute se produit dans le lit fluidisé.

13. Procédé selon la revendication 11 ou 12, dans lequel le courant de restauration comprend un vecteur d'énergie choisi dans le groupe constitué par les gaz froids, les vapeurs froides, les liquides froids ou les réactifs qui réagissent de manière endothermique dans les conditions régnant dans le lit de particules solides fluidisées pendant le mode de restauration, et leurs combinaisons.

14. Procédé selon l'une quelconque des revendications 11 à 13, dans lequel, pendant le mode de restauration, les particules solides fluidisées catalysent une réaction chimique endothermique des réactifs contenus dans le courant de restauration.

15. Procédé selon l'une quelconque des revendications 1 à 14, dans lequel le procédé utilise au moins deux lits de particules solides fluidisées qui sont chacun utilisés en alternance dans le mode de production et le mode de restauration, lesdits au moins deux lits comprenant un premier lit qui est utilisé dans le mode de production et un second lit qui est utilisé simultanément dans le mode de restauration, le premier lit passant du mode de production au mode de restauration en détournant au moins une partie du courant de matière brute alimentant le premier lit vers le second lit et, simultanément, le second lit passant du mode de restauration au mode de production en détournant au moins une partie du courant de restauration alimentant le second lit vers le premier lit quand (i) la température des particules solides fluidisées dans le premier lit a augmenté jusqu'à une valeur maximale prédéterminée ou diminué jusqu'à une valeur minimale prédéterminée ou (ii) la température des particules solides fluidisées dans le second lit a été restaurée à une valeur cible prédéterminée.

16. Procédé selon la revendication 15, dans lequel le mode de production est endothermique et le mode de restauration est exothermique et dans lequel au moins une partie du courant de produit généré pendant le mode de production dans l'un et l'autre des deux lits est introduit en tant que réactif dans le courant de restauration qui alimente l'autre lit.

17. Procédé selon la revendication 16, dans lequel le mode de production comprend la conversion par reformage à la vapeur d'un courant de matière brute comprenant de l'eau et un hydrocarbure et dans lequel le mode de restauration comprend la conversion selon un procédé au gaz à l'eau d'un courant de restauration comprenant de la vapeur d'eau et au moins une partie du monoxyde de carbone généré pendant le mode de production.

18. Procédé selon l'une quelconque des revendications 1 à 10, dans lequel une biomasse ou un déchet polymère est soumis à une pyrolyse dans le mode de production, tandis qu'un combustible, et de préférence un gaz naturel, est brûlé avec de l'air dans le mode de restauration.

19. Appareil servant à mettre en oeuvre un procédé défini dans l'une quelconque des revendications précédentes, ledit appareil comprenant au moins un récipient contenant un lit de particules solides pouvant être fluidisées, ledit récipient comprenant en outre :
• un ou plusieurs orifices d'entrée pour courant de fluidisation situés sur un côté du lit ;
• un ou plusieurs orifices de sortie situés sur le côté opposé du lit ;
• un moyen d'échange principal permettant de faire passer en alternance le courant de matière brute ou le courant de restauration à travers le ou les orifices d'entrée.

20. Appareil selon la revendication 19, ledit appareil comprenant deux ou plus de deux récipients contenant un lit de particules solides pouvant être fluidisées, notamment un premier récipient et un second récipient, le moyen d'échange principal étant capable de rediriger le courant de matière brute alimentant les premiers récipients vers le second récipient tout en redirigeant simultanément le courant de restauration alimentant le second récipient ou l'un des deux ou plus de deux récipients vers le premier récipient.

21. Appareil selon la revendication 20, dans lequel au moins un des orifices d'entrée du premier récipient est connecté à au moins un des orifices de sortie du second récipient et dans lequel au moins un des orifices d'entrée du second récipient est connecté à au moins un des orifices de sortie du premier récipient, l'appareil contenant en outre un moyen d'échange secondaire permettant de faire passer en alternance un courant à partir de l'orifice de sortie d'un récipient vers l'orifice d'entrée de l'autre récipient, le fonctionnement du moyen d'échange secondaire étant synchronisé avec le fonctionnement du moyen d'échange principal.
